# EUROPEAN PATENT SPECIFICATION

(11) **EP 3 948 049 B1**
(45) Date of publication and mention of the grant of the patent: **02.12.2026**
(21) Application number: 20782882.3
(22) Date of filing: 27.03.2020
(51) Int. Cl.: F16L 55/164, F16J 15/14, F16L 55/179, F16L 55/42, F16L 101/60

(54) **METHODS FOR SEALING A PREMISE-SIDE PIPE**
VERFAHREN ZUR ABDICHTUNG EINER BAUSEITIGEN ROHRLEITUNG
PROCÉDÉS POUR SCELLER UN TUYAU CÔTÉ LOGEMENT

(30) Priority: 02.04.2019 US 201962827871 P
(43) Date of publication of application: 09.02.2022
(73) Proprietor: Curapipe System Ltd, 8305907 Kiryat Malachi (IL)
(72) Inventor: PAZ, Peter, 9083600 HAR ADAR (IL); HERCKY, David, 43259 Raanana (IL)
(74) Representative: Potter Clarkson
(86) International application number: PCT/IL2020/050370
(87) International publication number: WO 2020/202140

(56) References cited:
- EP-B1- 2 104 796
- WO-A1-2016/098093
- WO-A1-2016/098093
- WO-A1-2016/098095
- DE-A1- 10 044 551
- DE-A1- 10 044 551
- GB-A- 1 459 555
- GB-A- 1 459 555
- US-A1- 2017 145 273
- US-B1- 6 416 692

## Description

### FIELD OF THE INVENTION

The present invention relates generally to methods for sealing pipelines, and more specifically to methods for sealing premise pipes.

### BACKGROUND OF THE INVENTION

Many liquids and gases are transported overland via pipelines, which extend for hundreds of kilometers. These pipelines are subject to ageing, corrosion, cracks, earthquakes and other impacts, which can cause minor or major leakage. The leakage may be difficult to detect and yet more difficult to stop.

A leakage may be discovered by a sharp pressure-drop over the length of the pipeline, or by emission of the gas/liquid from the pipeline. This may lead to significant environmental pollutions and to massive financial loss. The repair of underground pipelines poses a series of complicated technological problems considering the relevant factors, including, difficult accessibility, partial or complete replacement of part of the pipeline, or in situ pipeline repair.

Russian Patent No. 2063273 describes a method of *in-situ* repair by injecting specific chemical substances from both sides of a damaged leakage location.

WO2008/081441, to Perstnev et al., describes a method of repairing leakage in pipelines. The method includes the steps of forming a first and second openings (14a, 14b) in the pipeline (10) upstream and downstream, respectively, of the leakage location, inserting through the first opening (14a) a first body (C1), filling the space arrear of the first body (C1) with a first viscous sealing material (M1), inserting through the first opening (14a) a second body (C2) arrear of the first viscous sealing material (M1) compressing the first sealing material by applying a pressure against the first and the second bodies (C1, C2) in opposite directions, causing the first and second bodies (C1, C2) and the compressed first sealing material (M1) to move in unison in the direction of the second opening (14b), and retrieving the first and second bodies (C1, C2). Preferably, the method is performed using three bodies (C1, C2, C3) and two sealing materials (M1, M2).

WO2016042541A1 provides pipeline pigs for maintenance of a pipeline, the pig including two adjacent ovular sections generally symmetrically disposed about a vertical axis, a polymeric band disposed along the vertical axis, the band being adapted to reduce a cross section of the pig along the axis and a longitudinal inner support member disposed centrally along the ovular sections and perpendicularly to the vertical axis.

WO2016098093A1 to Perstnev et al., describes systems for curing a leakage in a pipeline, the system including at least one gel pig and at least one sealant composition; wherein the at least one gel pig and the at least one sealant composition form a pig train, adapted to move along the pipeline to a region of the leakage and to seal the leakage.

WO2016098094A1 to Perstnev et al., describes methods for curing a leakage in a pipeline, the system including at least one gel pig and at least one sealant composition; wherein the at least one gel pig and the at least one sealant composition form a pig train, adapted to move along the pipeline to a region of the leakage and to seal the leakage.

WO2016098095A1 to Perstnev et al., provides leakage plugging devices and methods for sealing a leakage at a remote site in a pipe, the device including a porous carrier plug of a deformable material including pores and at least one sealant composition disposed in the pores, wherein the porous carrier plug is adapted to transport the at least one sealant composition from a first site to a remote site and to plug the leakage at the remote site.

Many industrial applications use fibers. Typically, fibers are used in compositions for building purposes. Some fibers are in the form of a yarn, that is, a continuous often-plied strand composed of either natural or man-made fibers or filaments.

In one non-limiting example, hemp yarn has a size of Nm 10 (Nm 10 yarn = 10,000 meters per kilogram, or about 4,960 yards per pound) from single to multiple plies of 1, 2, 3, 6 and 12 in either natural or bleached (using peroxide) Made from earth-friendly wet spun hemp, these yarns are smooth and durable The yarns may be provided on spools or in packages and may be single-ply, 2-ply, 3-ply, 5-ply, 6-ply and 12-ply or combinations thereof.

Several technologies have been developed to seal mains pipelines, but there remains a need to seal lateral pipelines. In many urban communities, up to 50% of the total water is lost due from a large number of service and lateral pipes.

Much water loss is due to premise-side leakages. These leakages can sometimes be underground and sometimes within a premises.

Premise plumbing includes that portion of the distribution system associated with private housing, schools, hospitals, public and other buildings and their properties. It is connected to the main municipal distribution system via a service line at one end and internally distributes water to the point of use outside and inside the premises at the other end.

From an infrastructure perspective it includes many low diameter pipes, joints and connections, valves, fittings and tubing, etc. made of a plethora of materials such as PEX, CPVC, galvanized steel, copper, ductile iron and others.

The infrastructure components of the potable plumbing system break down or fail over time due to chemical interactions between the materials and the surrounding environment. The outcome eventually leads to various types of leaks that can develop into a potential disaster, costing homeowners and building owners large amounts to repair and rehab. According to online sources, the average cost in the US for fixing leaks is $350 with homeowners spending in an additional $150 to $850 to detect the location of the leak. If the leak is in an inaccessible location like under a slab, the cost to tear out the concrete, repair the pipe, and pour concrete again can cost $2,000 or more. This could also be the case for repairing a leaking pipe in a ceiling.

There are also intangible negative impacts associated with the conventional method of leak repair in homes. This includes mental distress and inconvenience, water service disruption, general disruption to daily life and time spent waiting for the leak detection service, leak repair plumber and the rehab handyman. According to a survey conducted by the Faculty of the Virginia Polytechnic Institute in the US3, 70% of the respondents who had pinhole leaks in their homes spent at least 10 hours dealing with the leaks and damages.

Thus, there still remains a need for improved methods for sealing leaks in premises-side pipelines.

US2017145273 (A1) describes a sodium silicate solution and fiber composition for repairing leaks in plumbing, and methods of making and using the same.

DE10044551 (A1) describes sealant for plant and systems holding water, based on liquid water glass containing suspended cellulose fibers, also contains sodium chloride.

GB1459555 (A) describes foaming a sealant liquid and forcing it into pipes.

WO2016098095 (A1) describes leakage plugging devices and methods for sealing a leakage at a remote site in a pipe, the device including a porous carrier plug of a deformable material including pores and at least one sealant composition disposed in the pores, wherein the porous carrier plug is adapted to transport the at least one sealant composition from a first site to a remote site and to plug the leakage at the remote site.

### SUMMARY OF THE INVENTION

The invention are methods for sealing a leak according to the method steps of independent method claims 1, 4 and 5. Advantageous embodiments of the methods are defined in the dependent claims.

The pipelines may be of any length. The lateral and vertical pipes are typically, but not necessarily less than 1000 m, 100 m, 50 m, 30 m, 10 m 3 m or 1m. Typically, lateral/vertical pipes have internal diameters of less than, 4, 3 or 2 inches. The pipes or pipelines may be made of any suitable material or material combination, selected from, but not limited to, a plethora of materials such as PEX, CPVC, galvanized steel, copper, ductile iron, combinations thereof and the like.

In additional embodiments for the present invention, quick-curing pipeline sealant compositions are provided which are introduced into a mains line in order to seal a leak in a lateral pipeline.

According to several embodiments, in some case, the terminus of the lateral is isolated (i.e. terminated or valved off) and the sealant composition or pig train is drawn into the lateral by virtue of the leakage flow alone. According to other embodiments, a tap is disposed at the terminus of the lateral pipe to discharge liquid thus compensating for cases where the leakage flow alone is small.

A non-limiting example of a sealant composition is:
a) fibers of different sizes;
b) at least one sealant; and
c) water.

Moreover, according to an embodiment, the repair composition is disposed in a repair composition train.

Further, according to an embodiment, the repair composition train includes two pigs with the repair composition disposed therebetween.

Furthermore, according to an embodiment, the repair composition train includes a rear pig and the repair composition.

Yet further, according to an embodiment, the repair composition train includes three pigs with the repair composition disposed between a first and a second the pigs and a second repair composition disposed the second and a third pig.

Additionally, according to an embodiment, the pigs are liquid phase pigs.

Additionally or alternatively, according to an embodiment, the pigs are solid phase pigs.

Importantly, according to an embodiment, the repair composition is at a temperature of 4-120°C.

Additionally, according to an embodiment of the present invention, the sealant composition includes;
a hardener;
an elastic material; and
a polycondensate material.

Moreover, according to an embodiment, the liquid phase pigs include;
a cellulosic polysaccharide;
a surfactant; and
water.

Further, according to embodiment, the liquid phase pigs further include;
a filler; and
a metallic hydroxide.

Additionally, according to an embodiment, the liquid phase pigs further include an oil.

Yet further, according to an embodiment of the present invention, the leak is selected from the group consisting of a hole, a crack, a corroded section and combinations thereof.

It should be noted that according to an embodiment, the leak loses 50ml/hour-5,000 1/hr of the fluid.

Additionally, according to an embodiment of the present invention, the method further includes sealing at least one leak in the main pipeline.

Additionally or alternatively, according to an embodiment, the method further includes sealing a plurality of leaks in a plurality of lateral pipes.

Furthermore, according to an embodiment, the pressure is in a range of 0.3-10 bar.

Moreover, according to an embodiment, at least part of the rear pig and at least a portion of the repair composition enter the lateral pipe.

Additionally, according to an embodiment, the seal is formed in less than sixty seconds after the repair composition reaches the leak.

Additionally, according to an embodiment, the seal is cured in less than one, two or three hours after sealing the leak.

There is thus provided according to an embodiment, a system for sealing a leak in a on-premises pipe in a premises pipe network, the system including;
at least one repair composition;
at least one pig; and
a pressure control system for controlling at least one of a pressure in the premises pipe network

Additionally, according to an embodiment, the at least one repair composition includes two repair compositions.

Further, according to an embodiment of the present invention, the at least one pig includes one pig.

Additionally, according to an embodiment of the present invention, the at least one pig includes two pigs.

Furthermore, according to an embodiment of the present invention, the at least one pig includes three pigs.

Moreover, according to an embodiment of the present invention, the at least one pig includes a plurality of gel pigs.

Additionally, according to an embodiment, inlet and outlet valves of the premises pipe network are closed.

### BRIEF DESCRIPTION OF THE DRAWINGS

The invention will now be described in connection with certain preferred embodiments with reference to the following illustrative figures so that it may be more and fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice and as defined in the appended claims.

In the drawings:
Fig. 1 is a simplified schematic diagram of a system for curing a leak in a residential pipe connected to a manifold, in accordance with an embodiment of the present invention;
Fig. 2 is simplified schematic diagram of a system for curing a leak in a residential supply pipe, in accordance with an embodiment of the present invention;
Fig. 3 is a simplified schematic diagram of a system for curing a leak in a residential water supply system, in accordance with an embodiment of the present invention;
Fig. 4 is a simplified schematic diagram of a system for curing a leak in a swimming pool water supply system, in accordance with an embodiment of the present invention; and
Figs. 5A and 5B are simplified schematic diagrams of system for curing leaks in cold and hot water branched residential pipeline configurations, in accordance with embodiments of the present invention.

In all the figures similar reference numerals identify similar parts.

### DETAILED DESCRIPTION OF THE EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

The pigs, sealant compositions, carrier fluid compositions and chips used in the present invention may be any described in the following patents/patent applications, incorporated herein by reference:- WO2008/081441, to Perstnev et al., WO2016042541A1, WO2016098093A1, WO2016098094A1, WO2016098095A1, US Patent no. 9,045,648, US Patent no.9738798B2, US20170299108A1, US20170363245A1 and US20180003330A1.

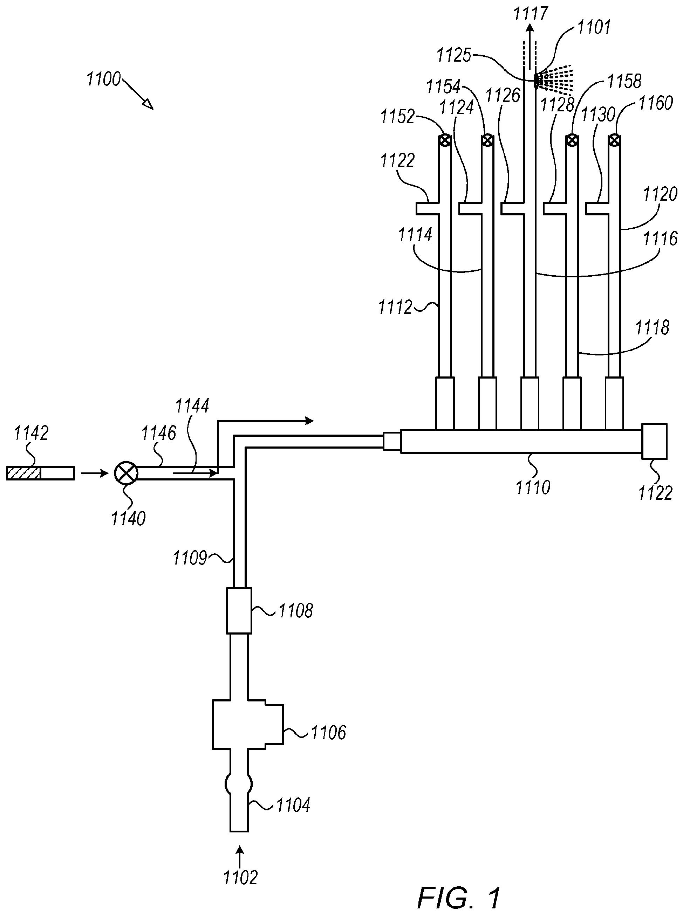

Reference is now made to Fig. 1, which is a simplified schematic diagram of a system 1100 for curing a leak 1101 in a residential pipe 1116 connected to a manifold 1110, in accordance with an embodiment of the present invention.

A sealant composition and/or pig train 1142 is introduced to a premise pipe 1146 (sometimes termed a supply pipe) via a valve or tap 1140 and specially-adapted conduit 1146, temporarily or permanently connected to the service pipe 1104. Typically, service pipe 1104, has a water meter 1106 and a valve 1108, and receives water or other fluid flow 1102 from a mains pipe (not shown). The water enters a second premise pipe 1109.

A manifold 1110 is configured to divide water or other fluid flow 1102 into a number of secondary pipes 1112, 1114, 1116, 1118 and 1120. These secondary pipes may have one or more branches 1122, 1124, 1126, 1128 and 1130, respectively. They also have one or more downstream valves 1152, 1154, 1158, and 1160, respectively for closing the flow to each of the secondary pipes. In the case illustrated, there is a leak site 1125 having leakage 1101 in pipe 1116. All of valves 1152, 1154, 1158, and 1160 are closed. The water flows out of pipe 1116 via flow 1117.

Flow 1102 is stopped by valve 1108. Thereafter, the sealant composition and/or pig train 1142, introduced via conduit 1146 and flows up pipe 1146 to manifold 1110. Since all of valves 1152, 1154, 1158, and 1160 are closed, the sealant composition and/or pig train 1142, travels up pipe 1116 to seal and cure the leakage site and stop leakage 1101. A sealant composition and/or pig train 1142 flow out of pipe 1116 at open valve (1156, not shown) and seals the leakage site.

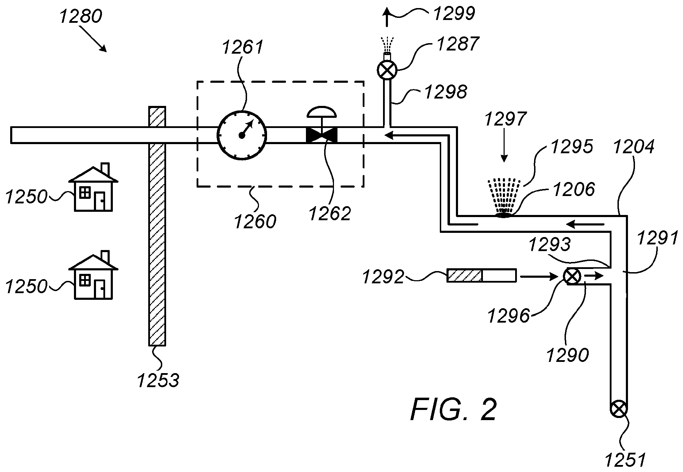

Fig. 2 is a simplified schematic diagram of system 1280 for curing a leak site 1206 with leak fluid 1297 leaking therefrom in a premise pipe, in accordance with an embodiment of the present invention.

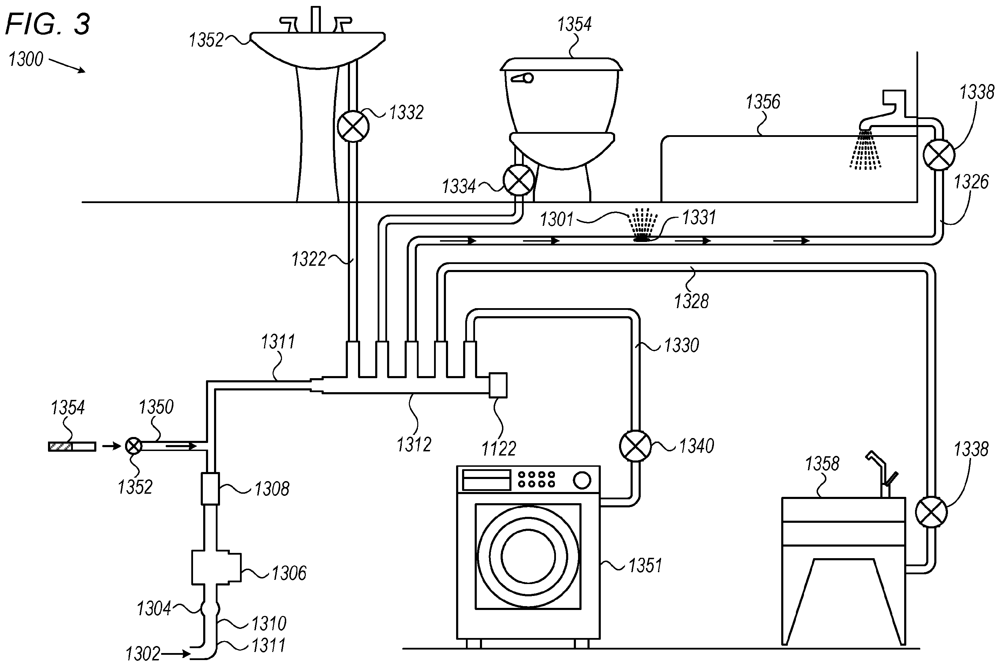

In this example, a sealant composition and/or pig train 1292 (similar or identical to pig train 1142 (Fig. 1) and/or 1354 (Fig. 3) is introduced to a premise pipe 1204 via a valve or tap 1296 and specially-adapted conduit 1290, temporarily or permanently connected to the premise pipe 1204.

The sealant composition and/or pig train 1292 flows in pipe 1204 to seal leak 1295 at a leakage point 1206, en passant. The sealant composition and/or pig train 1292 is recovered from system 1280 via a temporary exit conduit 1298 via an opened exit valve 1287 in a flow 1299. Typically, premise pipe 1204, has a valve 1251 further downstream which is closed during the operation to stop a flow out of the valve 1251.

The pressure of the flows in all the systems described herein, is typically controlled by an inlet pressure on the inlet flow, such as flow 1144 in Fig. 1 or the out of valve 1251 in Fig. 2, as well as the internal diameter and lengths of the various conduits and pipes, coupled with the discharge valve 1287 configuration (openness).

Turning to Fig. 3, there is seen a simplified schematic diagram of a system 1300 for curing a leak 1301 in a residential water supply 1302, in accordance with an embodiment of the present invention.

System 1300 comprises a service pipe 1310 receiving a fluid flow, such as, but not limited to water flow 1302. The service pipe comprises a connector 1304, a water/fluid meter 1306 and a valve or tap 1308. A premise pipe 1311 is in fluid connection via a manifold 1312 with a number of house pipes 1322, 1324, 1326, 1328 and 1330.

The house pipes connect the premise pipe with various utilities, such as a sink 1352, toilet 1354, bathtub 1356, bidet 1358 and washing machine 1351. These utilities should not be deemed limiting and may include any house fixture, utility, unit or machine requiring a water supply. Each of the house pipes 1322, 1324, 1326, 1328 and 1330 has one or more respective taps or valves 1332, 1334, 1336, 1338 and 1340, for switching the water supply on or off, and/or increasing reducing the water supply to that utility, respectively.

In close proximity to tap 1308, a temporary sealing conduit 1350 is connected with a valve 1352 or tap at the end thereof. A sealant composition or pig train 1354 is introduced into the system to seal a leak 1301 at a leakage site 1331 in one of the house pipes 1326. Tap or valve 1338 may be closed during the sealing cycle or opened if the leak is too small to create the necessary drive flow. After the sealing has been completed (could be more than one sealing cycle) then the remaining materials are flushed out.

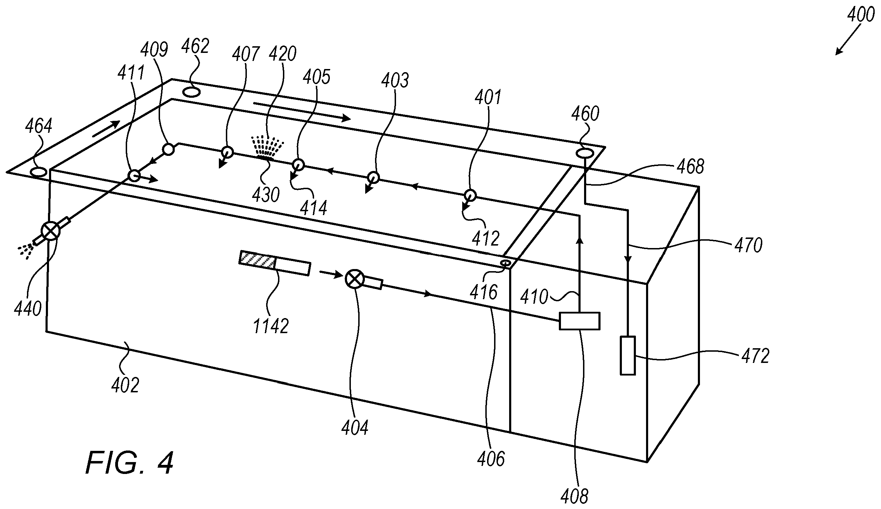

Fig. 4 is a simplified schematic diagram of a system 400 for curing a leak in a swimming pool water supply system, in accordance with an embodiment of the present invention.

Pipe 406 is typically a 63mm pipe or other. 408 is a pump which pressurizes incoming water to the pool system. The incoming water is filtered water that originates from skimmers (opposite jet nozzles) or the overflow gratings (460, 464) and goes down into the drainage system (470) to be filtered (472). Therefore, the system to be treated is part of a filtration system where the water constantly circulates. Pipe 410 is typically a 50mm pipe or other. 401, 403 are jet nozzles. Sealing leak 420 is similar to all other cases with the exception that the nozzles are first capped to form an isolated system. The jet nozzles are fitted with nozzle caps, as are known in the art (not shown) to isolate the system.

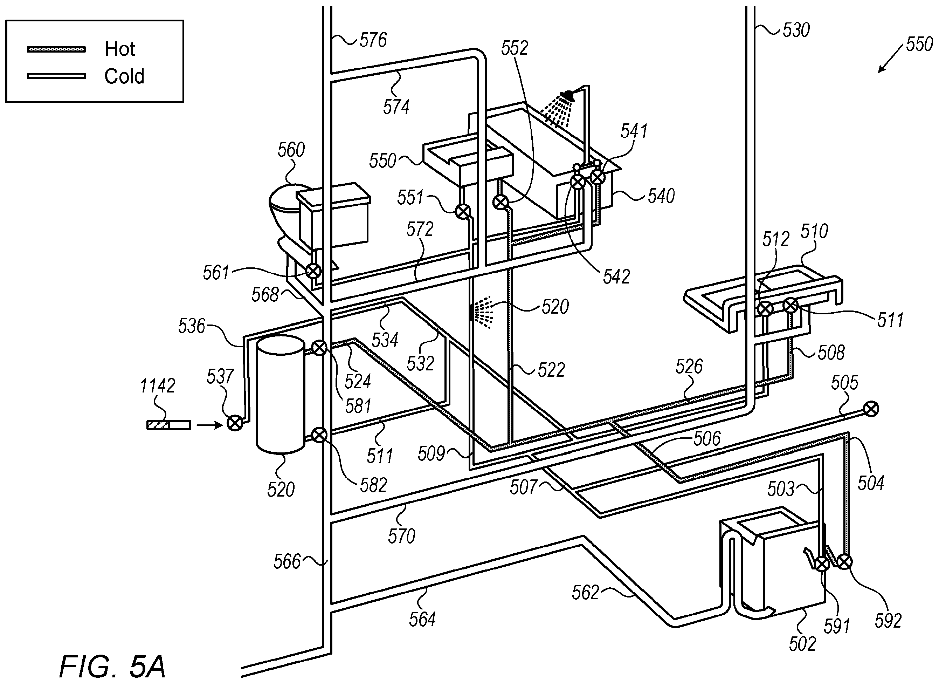

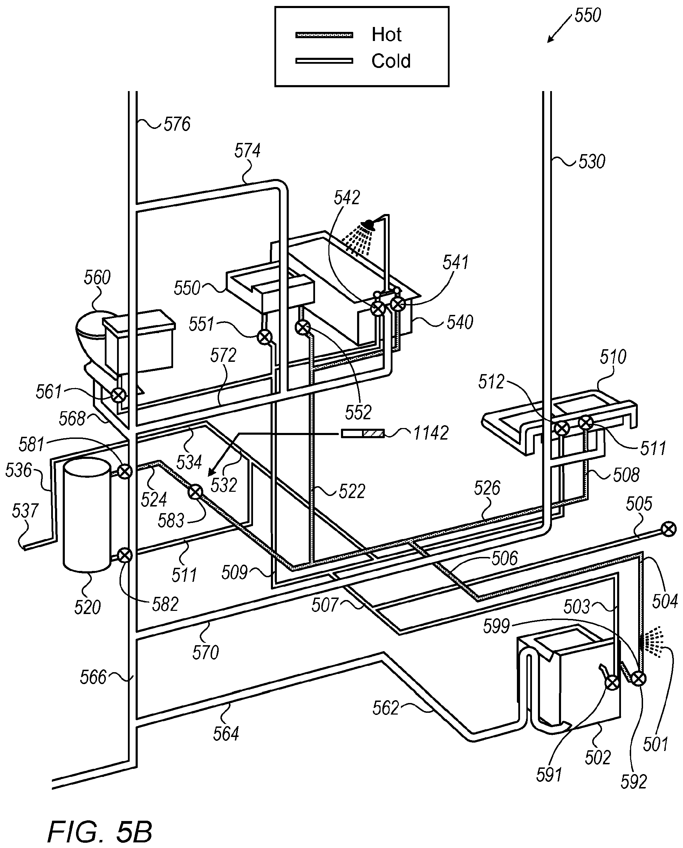

Figs. 5A and 5B are simplified schematic diagrams of systems 500, 550, respectively, for curing leaks in cold and hot water branched residential pipeline configurations, in accordance with embodiments of the present invention. The residential system includes a toilet 560 (with a valve 561), a hot water tank and heater 520 (with valves 581, 582), a bath (with valves 541, 542) and shower arrangement 540 (with valves 541, 542), sink arrangements 510, 550 (with valves 511, 512 and 551, 552, respectively), a washing machine 502 (with valves 591, 592), and a network of pipelines connecting cold water pipes 503, 505, 507 509, 511, 526, 534, 532, hot water pipes 504, 522, 524, 526 and sewage pipes 574, 566, 564, 562, a main stack 576 and a vent stack 530.

Figs 5A and 5B along the same principles as above in Figs. 1-4, a pig train 1142 or similar is introduced into pipe 536 via a valve 537 and travels via a branch 534 to a pipe 509 via one or more branches or pipes. All branches are isolated via the valves listed hereinabove at each of the termini so that the pig train only travels to the leak 520. In some case, the terminus of the premise-side (such as a house pipe) pipe is isolated (i.e. terminated or valved off) and the sealant composition or pig train is drawn into the pipe or pipe network by virtue of the leakage flow alone. According to other embodiments, a tap is disposed at the terminus of the lateral pipe to discharge liquid thus compensating for cases where the leakage flow alone is small.

Turning to Fig. 5B, a pig train 1142 or similar is introduced into pipe 524 via a valve 583 and travels via a branch to pipe 504 via two branches of pipes. All branches are isolated via taps/valves at each of the termini so that the pig train only travels to the leakage flow 501. In some case, the terminus of 504 is isolated (i.e. terminated or valved off) and the sealant composition or pig train is drawn into pipe 504 by virtue of the leakage flow 501 alone and finally seals said leakage flow. According to other embodiments, the tap/valve 592 at a terminus 599 of pipe 504 to discharge liquid thus compensating for cases where the leakage flow 501 alone is small.

The leak 520 in the cold water system (Fig. 5A) and/or leak 501 in the hot water system (Fig. 5B) is thus sealed and cured by the methods of the present invention.

It should be understood that Figs. 1-5B are exemplary and are intended to illustrate the methods of the present invention, which enable sealing and curing of many different types of leaks in premise-side pipe and/or pipe network leaks. This includes all types of pipeline topologies such as, but not limited to a star topology, a branch topology, a mixed topology and combinations thereof.

By premise, premise-side, premise-side network or house pipe is meant any pipe within/on a premises, of various types of connections and orientations and any topology such as star or branch topologies, but not limited thereto.

### Application 1

Repair method "inside" premise pipes.

The present invention relates to a process for repairing pipes, tubing from the "inside", in particular, to methods of repairing premise pipes.

In accordance with this method, repair materials (such as sealant compositions and/or a pig train) are fed into the premise network and/or premise pipes. The repair materials, such as a pig train and/or sealant compositions, are fed under pressure into and at a constant speed along the premise pipes. Upon arriving at a junction or branch the repair material will advance only up to the area of the leak and then when arriving at the said area, seals the leak from a hole/crack, where it then hardens, leading to the curing of the premise-side pipe and/or pipe-network. This eliminates or significantly reduces leakage from the premise-side pipe/network. Some aspects of the present invention provide novel methods and systems for increased reliability in the sealing of leakages in premise-side leaks.

At the same time, it is assumed to simplify the process of repair of such pipes and avoiding the need to excavate, avoiding tearing out concrete, walls, ceilings and the like.

This goal is achieved by the fact that the repair material is fed directly into the premise pipe. The remaining material from the repair is extracted at the terminus and the pipe is later flushed out to get rid of any remaining materials and to achieve the necessary water quality level form potable water.

Another non-limiting example of sealant composition 108 is:
a) plant fibers of different sizes;
b) silica;
c) at least one sealant composition; and
d) water or a carrier fluid.

Another non-limiting example of composition 108 is:
a) hemp plant fibers of different sizes;
b) at least one sealant composition;
c) silica; and
d) water or a carrier fluid.

Typically, fibers are used in compositions for building purposes. Some fibers are in the form of a yarn, that is, a continuous often-plied strand composed of either natural or man-made fibers or filaments.

In one non-limiting example, hemp yarn has a size of Nm 10 (Nm 10 yarn = 10,000 meters per kilogram, or about 4,960 yards per pound) from single to multiple plies of 2, 3, 5, 6 and 12 in either natural or bleached (using peroxide) Made from earth-friendly wet spun hemp, these yarns are smooth and durable The yarns may be provided on spools or in packages and may be single-ply, 2-ply, 3-ply, 6-ply and 12-ply or combinations thereof.

The pigs, sealant compositions, carrier fluid compositions and chips used in the present invention may be any described in the following patents/patent applications, incorporated herein by reference:- WO2008/081441, to Perstnev et al., WO2016042541A1, WO2016098093A1, WO2016098094A1, WO2016098095A1, US Patent no. 9,045,648, US Patent no.9738798B2, US20170299108A1, US20170363245A1 and US20180003330A1.

The references cited herein teach many principles that are applicable to the present invention.

It is to be understood that the invention is not limited in its application to the details set forth in the description contained herein or illustrated in the drawings. The invention is capable of other embodiments and of being practiced and carried out in various ways. Those skilled in the art will readily appreciate that various modifications and changes can be applied to the embodiments of the invention as hereinbefore described without departing from its scope, defined in and by the appended claims.

### REFERENCES

Bogoeva-Gaceva, G., Avella, M., Malinconico, M., Buzarovska, A., Grozdanov, A., Gentile, G., & Errico, M. E. (2007). Natural fiber eco-composites. Polymer composites, 28(1), 98-107.
Célino, A., Fréour, S., Jacquemin, F., & Casari, P. (2014). The hygroscopic behavior of plant fibers: A review. Frontiers in chemistry, 1, 43.
Mwaikambo, L. Y., & Ansell, M. P. (2002). Chemical modification of hemp, sisal, jute, and kapok fibers by alkalization. Journal of applied polymer science, 84(12), 2222-2234.
Wang, B., Sain, M., & Oksman, K. (2007). Study of structural morphology of hemp fiber from the micro to the nanoscale. Applied Composite Materials, 14(2), 89.

## Claims

1. A method for sealing at least one leak (1101) in at least one of a premise-side pipe (1116) and a premises-side pipe network comprising further premise-side pipes (1112, 1114, 1118, 1120), the method comprising:
a. providing a pressure control system for controlling a pressure in said premises-side pipe network;
b. closing a plurality of downstream valves (1152, 1154, 1158, 1160) in the further premise-side pipes (1112, 1114, 1118, 1120) of the premises-side pipe network; and
c. passing at least one gel pig and a sealant composition comprising fibers under pressure along the premise-side pipe (1116) comprising the leak (1101) and at least part of said premises-side pipe network such that a portion of said at least one gel pig and said sealant composition flows and enters a leakage site (1125) to seal said at least one leak (1101).

2. A method according to claim 1, wherein said leak (1101) is in said premises-side pipe network.

3. A method according to claim 1, further comprising passing said at least gel pig and said sealant composition from afurther premise-side pipe (1104) into all of said premise-side pipe of the premises-side pipe network.

4. A method for sealing a leak (1101) in a premises-side network comprising a plurality of premise-side pipes (1112, 1114, 1116, 1118, 1120), the method comprising:
a. providing a pressure control system for controlling a pressure in said premises-side pipe network;
b. closing a plurality of downstream valves (1152, 1154, 1158, 1160) in some of the premise-side pipes (1112, 1114, 1118, 1120) of the premises-side pipe network; and
c. passing at least one gel pig and a sealant composition comprising fibers under pressure along a first pipeline (1146) to said premises-side pipe network such that a portion of said at least one of a pig train and a sealant composition enters at least a part of said premises-side pipe network to a location (1125) of said leak (1101) to seal said leak.

5. A method for sealing a leak (1101) at a leakage site (1125) in a premise-side pipe (1116) of a premises-side pipe network comprising further premise-side pipes (1112, 1114, 1118, 1120), the method comprising:
a. providing a pressure control system for controlling a pressure in the premises-side pipe network;
b. closing a plurality of downstream valves (1152, 1154, 1158, 1160) in some of the premise-side pipes (1112, 1114, 1118, 1120) of the premises-side pipe network; and
c. passing at least one gel pig and a sealant composition comprising fibers under pressure along the premise-side pipe (1116) comprising said leak (1101) such that a portion of said at least one gel pig and said sealant composition enters said premise-side pipe (1116) from outside said premises-side pipe network; and
d. allowing said portion to reach said leak site (1125) and to seal said leak (1101).

6. A method according to claim 1, wherein the premise-side pipe (1116) and said premises-side pipe network are adapted to convey a fluid selected from the group consisting of water, gas, a heating fluid a cooling fluid and a drain pipe.

7. A method according to claim 1, wherein said at least one gel pig comprise one gel pig.

8. A method according to claim 7, wherein said at least one gel pig comprises at least two gel pigs.

9. A method according to claim 8, wherein said at least one gel pig comprises at least three gel pigs.

10. A method according to claim 9, wherein said sealant composition further comprises chips.

11. A method according to claim 1, wherein said at least one gel pig and said sealant composition is at a temperature of 4-50 °C.

12. A method according to claim 9, wherein said sealant composition comprises:
a. a hardener;
b. optionally, a resin;
c. an elastic material; and
d. a polycondensate material.

13. A method according to claim 12, wherein said at least one gel pig comprises:
a. a cellulosic polysaccharide; and
b. water.

14. A method according to claim 12, wherein said at least one gel pig further comprises boric acid.

15. A method according to claim 1, wherein said leak (1101) is selected from the group consisting of a hole, a crack, a corroded section and combinations thereof.

## Patentansprüche

1. Verfahren zum Abdichten mindestens eines Lecks (1101) in mindestens einem von einem gebäudeseitigen Rohr (1116) und einem gebäudeseitigen Rohrnetzwerk, das weitere gebäudeseitige Rohre (1112, 1114, 1118, 1120) umfasst, das Verfahren umfassend:
a. Bereitstellen eines Drucksteuersystems zum Steuern eines Drucks in dem gebäudeseitigen Rohrnetzwerk;
b. Schließen einer Vielzahl von stromabwärtigen Ventilen (1152, 1154, 1158, 1160) in den weiteren gebäudeseitigen Rohren (1112, 1114, 1118, 1120) des gebäudeseitigen Rohrnetzwerks; und
c. Leiten mindestens eines Gelmolchs und einer Fasern umfassenden Abdichtungsmittelzusammensetzung unter Druck entlang des gebäudeseitigen Rohrs (1116), das das Leck (1101) umfasst, und mindestens eines Teils des gebäudeseitigen Rohrnetzwerks, derart, dass ein Teil des mindestens einen Gelmolchs und der Abdichtungsmittelzusammensetzung fließt und in eine Leckstelle (1125) eintritt, um das mindestens eine Leck (1101) abzudichten.

2. Verfahren nach Anspruch 1, wobei sich das Leck (1101) in dem gebäudeseitigen Rohrnetzwerk befindet.

3. Verfahren nach Anspruch 1, ferner umfassend das Leiten des mindestens einen Gelmolchs und der Abdichtungsmittelzusammensetzung aus einem weiteren gebäudeseitigen Rohr (1104) in das gesamte gebäudeseitige Rohr des gebäudeseitigen Rohrnetzwerks.

4. Verfahren zum Abdichten eines Lecks (1101) in einem gebäudeseitigen Rohrnetzwerk, das eine Vielzahl von gebäudeseitigen Rohren (1112, 1114, 1116, 1118, 1120) umfasst, das Verfahren umfassend:
a. Bereitstellen eines Drucksteuersystems zum Steuern eines Drucks in dem gebäudeseitigen Rohrnetzwerk;
b. Schließen einer Vielzahl von stromabwärtigen Ventilen (1152, 1154, 1158, 1160) in einigen der gebäudeseitigen Rohre (1112, 1114, 1118, 1120) des gebäudeseitigen Rohrnetzwerks; und
c. Leiten mindestens eines Gelmolchs und einer Fasern umfassenden Abdichtungsmittelzusammensetzung unter Druck entlang einer ersten Rohrleitung (1146) zu dem gebäudeseitigen Rohrnetzwerk, sodass ein Teil des mindestens einen von einem Molchzug und einer Abdichtungsmittelzusammensetzung in mindestens einen Teil des gebäudeseitigen Rohrnetzwerks bis zu einer Stelle (1125) des Lecks (1101) eintritt, um das Leck abzudichten.

5. Verfahren zum Abdichten eines Lecks (1101) an einer Leckstelle (1125) in einem gebäudeseitigen Rohr (1116) eines gebäudeseitigen Rohrnetzwerks, das weitere gebäudeseitige Rohre (1112, 1114, 1118, 1120) umfasst, das Verfahren umfassend:
a. Bereitstellen eines Drucksteuersystems zum Steuern eines Drucks in dem gebäudeseitigen Rohrnetzwerk;
b. Schließen einer Vielzahl von stromabwärtigen Ventilen (1152, 1154, 1158, 1160) in einigen der gebäudeseitigen Rohre (1112, 1114, 1118, 1120) des gebäudeseitigen Rohrnetzwerks; und
c. Leiten mindestens eines Gelmolchs und einer Fasern umfassenden Abdichtungsmittelzusammensetzung unter Druck entlang des gebäudeseitigen Rohrs (1116), das das Leck (1101) umfasst, sodass ein Teil des mindestens einen Gelmolchs und der Abdichtungsmittelzusammensetzung von außerhalb des gebäudeseitigen Rohrnetzwerks in das gebäudeseitige Rohr (1116) eintritt; und
d. Zulassen, dass der Abschnitt die Leckstelle (1125) erreicht und das Leck (1101) abdichtet.

6. Verfahren nach Anspruch 1, wobei das gebäudeseitige Rohr (1116) und das gebäudeseitige Rohrnetzwerk dazu ausgelegt sind, ein Fluid zu leiten, ausgewählt aus der Gruppe zusammengesetzt aus Wasser, Gas, einem Heizfluid, einer Kühlflüssigkeit und einem Abflussrohr.

7. Verfahren nach Anspruch 1, wobei der mindestens eine Gelmolch einen Gelmolch umfasst.

8. Verfahren nach Anspruch 7, wobei der mindestens eine Gelmolch mindestens zwei Gelmolche umfasst.

9. Verfahren nach Anspruch 8, wobei der mindestens eine Gelmolch mindestens drei Gelmolche umfasst.

10. Verfahren nach Anspruch 9, wobei die Abdichtungsmittelzusammensetzung ferner Chips umfasst.

11. Verfahren nach Anspruch 1, wobei der mindestens eine Gelmolch und die Abdichtungsmittelzusammensetzung eine Temperatur von 4 bis 50 °C aufweisen.

12. Verfahren nach Anspruch 9, wobei die Abdichtungsmittelzusammensetzung umfasst:
a. einen Härter;
b. optional ein Harz;
c. ein elastisches Material; und
d. ein Polykondensatmaterial.

13. Verfahren nach Anspruch 12, wobei der mindestens eine Gelmolch umfasst:
a. ein cellulosisches Polysaccharid; und
b. Wasser.

14. Verfahren nach Anspruch 12, wobei der mindestens eine Gelmolch ferner Borsäure umfasst.

15. Verfahren nach Anspruch 1, wobei das Leck (1101) ausgewählt ist aus der Gruppe, bestehend aus einem Loch, einem Riss, einem korrodierten Abschnitt und Kombinationen davon.

## Revendications

1. Procédé permettant de sceller au moins une fuite (1101) dans au moins l'un parmi une conduite côté locaux (1116) et un réseau de conduites côté locaux comprenant d'autres conduites côté locaux (1112, 1114, 1118, 1120), le procédé comprenant :
a. la fourniture d'un système de régulation de pression pour réguler une pression dans ledit réseau de conduites côté locaux ;
b. la fermeture d'une pluralité de vannes aval (1152, 1154, 1158, 1160) dans les autres conduites côté locaux (1112, 1114, 1118, 1120) du réseau de conduites côté locaux ; et
c. le passage d'au moins un racleur de gel et une composition d'étanchéité comprenant des fibres sous pression le long de la conduite côté locaux (1116) comprenant la fuite (1101) et d'au moins une partie dudit réseau de conduites côté locaux de telle sorte qu'une partie dudit au moins un racleur de gel et de ladite composition d'étanchéité s'écoule et pénètre dans un site de fuite (1125) pour sceller ladite au moins une fuite (1101).

2. Procédé selon la revendication 1, dans lequel ladite fuite (1101) se trouve dans ledit réseau de conduites côté locaux.

3. Procédé selon la revendication 1, comprenant en outre le passage dudit au moins un racleur de gel et ladite composition d'étanchéité depuis une conduite côté locaux (1104) supplémentaire dans la totalité de ladite conduite côté locaux du réseau de conduites côté locaux.

4. Procédé pour colmater une fuite (1101) dans un réseau de conduites côté locaux comprenant une pluralité de conduites côté locaux (1112, 1114, 1116, 1118, 1120), le procédé comprenant :
a. la fourniture d'un système de régulation de pression pour réguler une pression dans ledit réseau de conduites côté locaux ;
b. la fermeture d'une pluralité de vannes aval (1152, 1154, 1158, 1160) dans certaines des conduites côté locaux (1112, 1114, 1118, 1120) du réseau de conduites côté locaux ; et
c. le passage d'au moins un racleur de gel et une composition d'étanchéité comprenant des fibres sous pression le long d'une première conduite (1146) jusqu'audit réseau de conduites côté locaux de telle sorte qu'une partie dudit au moins un élément parmi un train de racleurs et une composition d'étanchéité pénètre dans au moins une partie dudit réseau de conduites côté locaux jusqu'à un emplacement (1125) de ladite fuite (1101) pour sceller ladite fuite.

5. Procédé permettant de sceller une fuite (1101) au niveau d'un site de fuite (1125) dans une conduite côté locaux (1116) d'un réseau de conduites côté locaux comprenant des conduites côté locaux (1112, 1114, 1118, 1120) supplémentaires, le procédé comprenant :
a. la fourniture d'un système de régulation de pression pour réguler une pression dans le réseau de canalisations côté locaux ;
b. la fermeture d'une pluralité de vannes aval (1152, 1154, 1158, 1160) dans certaines des conduites côté locaux (1112, 1114, 1118, 1120) du réseau de conduites côté locaux ; et
c. le passage d'au moins un racleur de gel et une composition d'étanchéité comprenant des fibres sous pression le long de la conduite côté locaux (1116) comprenant ladite fuite (1101) de telle sorte qu'une partie dudit au moins un racleur de gel et de ladite composition d'étanchéité pénètre dans ladite conduite côté locaux (1116) depuis l'extérieur dudit réseau de conduites côté locaux ; et
d. l'autorisation de ladite partie à atteindre ledit site de fuite (1125) et de sceller ladite fuite (1101).

6. Procédé selon la revendication 1, dans lequel la conduite côté locaux (1116) et ledit réseau de conduites côté locaux sont adaptés pour transporter un fluide choisi dans le groupe constitué d'eau, de gaz, d'un fluide de chauffage, d'un fluide de refroidissement et d'une conduite d'évacuation.

7. Procédé selon la revendication 1, dans lequel ledit au moins un racleur de gel comprend un racleur de gel.

8. Procédé selon la revendication 7, dans lequel ledit au moins un racleur de gel comprend au moins deux racleurs de gel.

9. Procédé selon la revendication 8, dans lequel ledit au moins un racleur de gel comprend au moins trois racleurs de gel.

10. Procédé selon la revendication 9, dans lequel ladite composition d'étanchéité comprend en outre des copeaux.

11. Procédé selon la revendication 1, dans lequel ledit au moins un racleur de gel et ladite composition d'étanchéité sont à une température de 4-50 °C.

12. Procédé selon la revendication 9, ladite composition d'étanchéité comprenant :
a. un durcisseur ;
b. éventuellement, une résine ;
c. un matériau élastique ; et
d. un matériau poly condensat.

13. Procédé selon la revendication 12, dans lequel ledit au moins un racleur de gel comprend :
a. un polysaccharide cellulosique ; et
b. de l'eau.

14. Procédé selon la revendication 12, dans lequel ledit au moins un racleur de gel comprend en outre de l'acide borique.

15. Procédé selon la revendication 1, dans lequel ladite fuite (1101) est choisie dans le groupe constitué d'un trou, d'une fissure, d'une section corrodée et leurs combinaisons.
